(19) Europäisches Patentamt
European Patent Office
Office européen des brevets

(11) **EP 3 182 067 A1**

(12) **EUROPEAN PATENT APPLICATION**

(43) Date of publication:
**21.06.2017 Bulletin 2017/25**

(51) Int Cl.:
***G01C 21/24*** (2006.01)   ***G01C 21/02*** (2006.01)

(21) Application number: **15307060.2**

(22) Date of filing: **18.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **UNIVERSITE DE MONTPELLIER**
  **34090 Montpellier (FR)**

• **Centre National de la Recherche Scientifique**
  **75016 Paris (FR)**

(72) Inventors:
• **KHOREV, Andrey**
  **34000 Montpellier (FR)**
• **TORRES, Lionel**
  **34980 Montpellier (FR)**

(74) Representative: **Gevers & Orès**
  **41 avenue de Friedland**
  **75008 Paris (FR)**

(54) **METHOD AND APPARATUS FOR DETERMINING SPACECRAFT ATTITUDE BY TRACKING STARS**

(57)   A method and a device for determining the attitude of a spacecraft by attitude determination using fast star identification using a so-called star tracker is proposed with an improved algorithm with pattern extraction based on rings having an equal area. In some embodiments a confidence value is attributed to the candidates of the matching process improving significantly the verification process.

Fig. 4

EP 3 182 067 A1

**Description**

The present invention concerns a method and a device for determining the attitude of a spacecraft by attitude determination using fast star identification using a so-called star tracker.

Accurate attitude determination has always been important for the success of space missions. Attitude information can be derived from a wide range of measurements, however it is generally recognized that star trackers represent the most accurate available solution to the problem.

Star trackers operate according to the following general principle: a camera, usually with a medium or narrow field of view (FOV), provides images of a portion of the celestial sphere. Such images are processed and compared with a star catalog stored on board, in order to match captured stars with the stars from the catalog (star identification problem). Knowledge of the position of stars both in the camera reference frame (as provided by the sensor) and in an inertial reference frame (as provided by the catalog) constitutes the input for the actual attitude determination problem, for which a number of solutions are available in the literature.

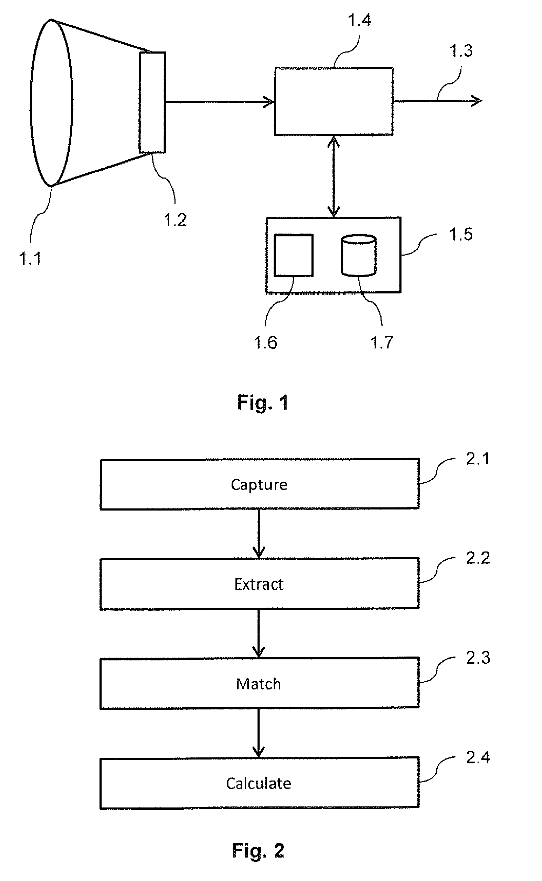

**Figure 1** illustrates a typical star tracker device architecture. The star tracker comprises a camera mounted on the spacecraft with an optical system **1.1,** here schematically illustrated by a single lens, producing of an image of a starry sky. This image is captured by a sensor **1.2** of the camera. The image may, when necessary, be subjected to basic image treatment such as, for example, optical distortion correction, noise reduction by an integrated processor not represented. The resulting image out of the camera is transferred to a main processor **1.4** to be loaded in a memory **1.5** as a stored captured image **1.6.** The main processor **1.4** uses a star identification algorithm to analyze the captured image **1.6** and identify stars in this image. To do this, the processor uses a database **1.7** of existing stars with their location. By matching stars appearing in the captured image against stars known in the database, the main processor is able to compute the attitude **1.3,** typically as Euler angles or quaternion of rotation, of a coordinate system linked to the camera, and therefore to the spacecraft, in earth inertial coordinate frame.

Depending on algorithm and mode of operation star tracker may work with or without *a priori* information about spacecraft's attitude: in tracking mode device captures the movement of star patterns in the field of view and updates the spacecraft attitude on each measurement; whereas in lost-in-space (LIS) mode device performs identification of star patterns in the field of view by matching extracted pattern features against onboard star database and calculates spacecraft attitude based on current image on the camera sensor.

**Figure 2** illustrates the main steps in Star tracker algorithm. The first step **2.1** consists in capturing the image of a starry sky and transfering it in the memory.

Next, in a step **2.2,** the algorithm determines spots representing potential stars present in the image. This steps comprises typically thresholding the image to get rid of background noise to get a black and white image. Next a clustering operation will aggregate neighboring white pixel to constitutes a single potential star and then to extract for each potential star an associated pattern.

Next, in a step **2.3,** the matching process consists in, for each potential star in the image, database search and pattern matching. This leads typically to a set of candidates in the database for each potential star. These candidates are then verified in order to ensure a positive identification in the database for the potential star.

Next, in a step **2.4,** assuming that a sufficient number of potential stars have been positively identified in step 2.3, the attitude is estimated.

An example of such algorithm, called POLESTAR, is described in "Star Identification Algorithms: Novel Approach & Comparison Study" by E. Silany and M. Lovera, IEEE TRANSACTIONS ON AREOSPACE AND ELECTRONIC SYSTEMS, vol. 42, N°. 4, OCTOBER 2006.

Computation should occur in real time during the spacecraft operation. Especially for satellites, the size, weight and power consumption are critical aspects. For these reason optimizing this algorithm allows building smaller, lighter and less consuming star tracker devices.

The present invention has been devised to address one or more of the foregoing concerns. It is proposed an improved algorithm with pattern extraction based on rings having an equal area. In some embodiments a confidence value is attributed to the candidates of the matching process improving significantly the verification process.

According to a first aspect of the invention there is provided a method of determining the attitude of a spacecraft, the method comprising:

- capturing an image of a starry sky by a camera linked to the spacecraft;
- determining spots representing potential stars in the captured image;
- extracting for each determined spot an associated pattern based on a circular grid defined by a set of adjacent rings centered on said spot, said pattern being constituted by a binary word, each bit corresponding to one of said rings, each bit being marked according to the neighboring of said spot in the area of the corresponding ring in the captured image;
- searching, for each determined spot, a database of reference stars for selecting a list of reference stars representing best candidates having an associated pattern close to the spot pattern;
- verifying if the spot may be positively identified as one reference star by matching the spot and each best candidates; and
- determine the attitude of the spacecraft from positively identified spots;

characterized in that:

- said circular grid is a polynomial circular grid that balances the probability of having a mark across the whole pattern.

In an embodiment, said polynomial circular grid is defined by rings delimitated by circles which radius are defined using the polynomial formula:

$$R_{N+1} = R_N + \Delta_N,$$

with:

$$\Delta_N = \sqrt{R_{N-1}^2 + 4\,R_{N-1}\Delta_{N-1} + 2\,\Delta_{N-1}^2} - R_{N-1} - \Delta_{N-1};$$

where $R_N$ is the radius of the nth circle and $\Delta_N$ is the difference between the radius of the nth circle and the radius of the next circle.

In an embodiment:

- said list of best candidates is constituted by selecting the reference star in the database having the highest mark score, said mark score counting the number of corresponding mark in the spot pattern and the reference star pattern; and
- verifying if the spot may be positively identified as one reference star consists in verifying is a confidence value, based on the mark score and taking into account the fact that camera sensitivity and database magnitude cut-off value may be mismatched, is greater than a given confidence threshold.

In an embodiment:

- the confidence value is computed according to the formula:

$$Confidence = 2 * \frac{Mark\ Score}{Star\ Marks + Spot\ Marks};$$

Where *Mark Score* is the mark score, *Star Marks* and *Spot Marks* are respectively the number of marks in the star pattern and in the spot pattern; and
- the confidence threshold is computed according to the formula;

$$Confidence\_theshold = 2 * \frac{Max\ Score - 1}{avg(Star\ Marks) + avg(Spot\ Marks)}$$

Where *Max Score* is the higher mark score, *avg(Star Marks)* is the average number of marks in the pattern of reference stars in the database, and *avg(Spot Marks)* is the average number of marks of spot patterns.

In an embodiment, said confidence threshold is recalculated during operational stage to take into account amount of sensor noise.
In an embodiment, said confidence threshold is recalculated at run time to take into account different lightning conditions.
In an embodiment, said steps of searching and verifying are done in parallel for each spot.
According to another aspect of the invention there is provided a device for determining the attitude of a spacecraft, the device comprising:

- a camera linked to the spacecraft for capturing an image of a starry sky;
- means for determining spots representing potential stars in the captured image;
- means for extracting for each determined spot an associated pattern based on a circular grid defined by a set of adjacent rings centered on said spot, said pattern being constituted by a binary word, each bit corresponding to one of said rings, each bit being marked according to the neighboring of said spot in the area of the corresponding ring in the captured image;

- means for searching, for each determined spot, a database of reference stars for selecting a list of reference stars representing best candidates having an associated pattern close to the spot pattern;
- means for verifying if the spot may be positively identified as one reference star by matching the spot and each best candidates; and
- means for determining the attitude of the spacecraft from positively identified spots;

characterized in that:

said circular grid is a polynomial circular grid that normalizes the probability of having a mark across the whole pattern.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:

Figure 1 illustrates a typical star tracker device architecture;
Figure 2 illustrates the main steps in Star tracker algorithm;
Figure 3 illustrates the extraction of patterns in an embodiment of the invention;
Figure 4 illustrates polynomial circular grid example;
Figure 5 is a schematic block diagram of a computing device for implementation of one or more embodiments of the invention.

The catalog of stars used for the star tracker algorithm is based on known catalogs of stars. The catalog is filtered in order to keep only stars with a magnitude matching the sensitivity of the camera. Advantageously, the binary stars and variable stars are also filtered out as they are not suitable for matching. Close stars that usually merge due to the Point-Spread-Function of the optical system of the camera are also filtered out. Then the visual magnitude of stars are converted to instrumental magnitude taking into account their B-V color index. Following these steps, a further filtering occurs to retain only those stars with an instrumental magnitude equal or smaller than a given threshold, namely the brightest ones. It is recalled here that a low magnitude corresponds to a high brightness. The catalog may be further adjusted in order to guarantee that for any possible orientation of the camera field of view a minimum number of reference stars is visible. All these operation are used to build the reference catalog used for the star tracking algorithm.

The computational load of the capture step 2.1 and the calculation step 2.4 is small compared to the extraction step and matching step. Typically, the capture step 2.1 takes 5% of the total computation time of the algorithm while the calculation step 2.4 takes 1% of the same. We will focus on extraction and matching in this document.

The star identification algorithm proposed herein involves generating a set of patterns for the selected group of reference stars in the reference catalog, whose position on celestial sphere are known in a Earth-centered inertial frame (ECI frame). This pattern set constitutes a database which is used to compare patterns derived in a similar way from the sensor image. As each star has its own signature, finding a suitably close match to a pattern is equivalent to pairing the two stars for the purpose of identification.

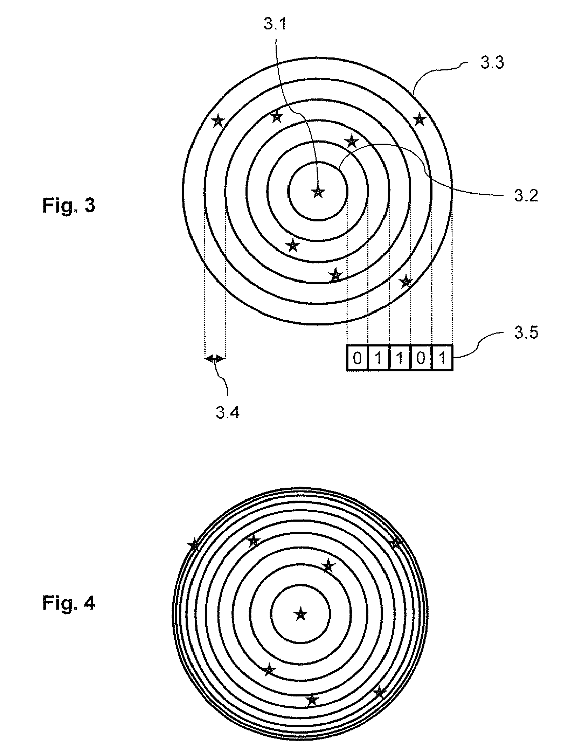

**Figure 3** illustrates the extraction of patterns in an embodiment of the invention. The process of extraction is the same for stars in the reference catalog and for potential stars, also called spots in this document, in the captured image.

The extraction of pattern is based on a circular grid centered on the spot. The circular grid is defined by a set of adjacent rings centered on said spot. The pattern is constituted by a binary word. Each bit of the pattern corresponds to one ring of the circular grid. Each bit of the pattern is marked according to the neighboring of said spot in the area of the corresponding ring in the captured image.

A pattern is calculated for a given star or spot **3.1**. A first circle **3.2** is calculated centered on the star **3.1** with a first radius $R_{min}$. Next a number of circles with increasing radius are calculated also centered on the star **3.1** until the outer circle **3.3**. These circles are equally spaced meaning that two successive circles have radius with the following relation: $R_{N+1} = R_N + \delta$, where $R_N$ is the radius of the nth circle, $R_{N+1}$ is the radius of the next circle and $\delta$ is the constant difference **3.4** between two successive circles.

These circles define rings around the central star **3.1**. The central part between the central star **3.1** and the inner ring 3.2 is ignored. Each ring defines an area between two successive circles. These rings define a so-called circular grid.

The pattern **3.5** are encoded into binary code words, each pattern corresponds to a binary code word which number of bits is equal to the number of rings. Each bit is set to 0 if no star belongs to the area of the corresponding rings. The bit is set to 1 if at least one star belongs to the area of the corresponding ring.

While the figure illustrates a pattern based on 5 rings for the sake of clarity, the real number of rings used falls typically in the range from 50 to 300 rings, while not limited to these numbers. This pattern gives a signature to a star based on the disposition of its neighbors.

Patterns corresponding to reference stars in the catalog are computed during a preliminary step and stored in the database, typically in a lookup table.

The extraction process, step **2.2** on **figure 2**, comprises a selection of bright pixels based on brightness threshold and grouping them into bright pixel clusters forming spots. The number of selected spots depends on camera sensitivity. Once the selection is done, each selected spot is subjected to the pattern extraction algorithm as described above for reference stars.

The matching process, step **2.3** on figure **2**, comprises for each selected spot associated with its extracted pattern and magnitude, to search in the database corresponding stars. The pattern of the spot is compared to patterns in the database to find close matches. A mark score is attributed to each comparison between a spot pattern and a reference star pattern. A mark is defined to be a "1" value in the pattern bit word. The mark score is the number of mark in the spot pattern corresponding to a mark in the star pattern at the same location. At the end of the process, the reference stars exhibiting the highest mark scores have the closest pattern regarding the spot one.

An exact match, meaning a mark score corresponding to the number of mark in the spot pattern, is rarely observed. Indeed, the number of stars in a typical view of the database depends on the filtering thresholds applied to filter the catalog. It also depends on filtered out binary and variable stars. For the captured image, the number of spots depends on the pixel brightness thresholds applied to filter the captured image, the level of illumination that may occur from the sun, the level of noise in the original image leading to spot being actual noise and not stars. Therefore, even for an spot representing an actual reference star, the observed neighborhood in the capture image rarely match perfectly the theoretical neighborhood observed in the database view. Nevertheless reference stars which pattern when compared to the spot pattern leads to a high mark score are good candidates for an identification. The result of this phase is a list of best match candidates. In some cases, this list may be empty if no reference stars get a mark score greater than a predefined threshold.

Next the best candidates are subjected to a verification step in order to positively identify the spot to one of the best candidate reference star in the catalog. The verification steps may consist, for example, in constructing first pairs, then triangles and finally higher levels polygons based on the spot and its neighbors and matching them to the same computed based on reference stars.

An unambiguous identification arises when we find a unique match between a triangle obtained from the spots and a triangle generated from the candidates and no matches between polygons with a number $n \geq 3$ of edges, or when we find a unique match between a 4-edges polygon obtained from the sensor stars and 4-edges polygon generated from the candidates and no matches between polygons with a number of edges greater than 4, and so on. Any other possible situation is marked as ambiguous and no identification is provided.

A positive identification of two spots as reference stars are enough to compute the attitude of the spacecraft.

Regarding the extraction of patterns, inventors have noticed that using equally spaced circles as described above to define an evenly-spaced grid leads to rings having an increasing area from the inner ring to the outer one. It means that the probability of having a mark in the pattern also increases from the first position to the last position in the pattern. The drawback of this methods is that the probability of false positive identification increase for spots with no close neighbors.

According to one embodiment of the invention, the pattern extraction is based on a *polynomial* circular grid that normalizes the probability of having a mark across the whole pattern. This means that each ring should have a similar area. The different circles used to delimitate the rings are no longer evenly spaced. Their radius are defined using a polynomial equation. For example, radius of successive circles may be computed according to the following formula:

$$R_{N+1} = R_N + \Delta_N,$$

with:

$$\Delta_N = \sqrt{R_{N-1}^2 + 4\,R_{N-1}\Delta_{N-1} + 2\,\Delta_{N-1}^2} - R_{N-1} - \Delta_{N-1};$$

where $R_N$ is the radius of the nth circle and $\Delta_N$ is the difference between the radius of the nth circle and the radius of the next circle. $R_1$ and $\Delta_1$ are parameters of the system.

Such *polynomial* circular grid, as illustrated on **figure 4,** balances the probability of having a "1" across the whole pattern, so we can assume the quality of match simply based on the mark score. Of course, the same pattern extraction process is used for both the reference stars in the catalog and the spots in the image using the same *polynomial* circular grid.

Accordingly the quality of the match is improved.

According to another embodiment of the invention, the selection of best candidates no longer relies on the mark score alone but also on a confidence value based on this mark score. The confidence value is defined as:

$$Confidence = 2 * \frac{Mark\,Score}{Star\,Marks + Spot\,Marks};$$

Where *Mark Score* is the mark score, *Star Marks* and *Spot Marks* are respectively the number of marks in the star pattern and in the spot pattern.

A confidence threshold is also considered. This confidence threshold is computed based on an average number of marks in the pattern of reference stars in the database and the average number of marks of spot patterns. For example, the confidence threshold may be calculated using the following formula:

$$Confidence\_theshold = 2 * \frac{Max\,Score - 1}{avg(Star\,Marks) + avg(Spot\,Marks)}$$

Where *Max Score* is the higher mark score, *avg*(*Star Marks*) is the average number of marks in the pattern of reference stars in the database, and *avg*(*Spot Marks*) is the average number of marks of spot patterns corresponding to current camera sensitivity setting.

Once the mark score is calculated, the confidence value is also calculated for all the reference stars. A list of best candidates is no longer calculated. A reliable match, meaning a positive identification of the spot as one of the reference star, is determined for a spot when the top candidate, meaning a unique candidate with the higher mark score, has a confidence value greater than the confidence threshold. No further verification step is needed.

Confidence-based match selection takes into account the fact that camera sensitivity and database magnitude cut-off value may be mismatched. In many cases it's done on purpose during development stage to reduce the size of the database. Confidence threshold may be recalculated during operational stage to take into account amount of sensor noise or even in runtime as a part of an adaptive mechanism for different lighting conditions. Correct choice of a confidence threshold gives up to 80% of true matches on non-adapted star database without verification step.

In classic approach after the database search is completed there will be a few spot having a potential match, and every such spot will have a list of best candidates. Classic polestar algorithm doesn't give information on which match with a candidate is reliable during database search phase, it only says which candidates are the best for one particular spot. And it's impossible to compare two spots and their candidates directly since they will have different number of neighbors hence different mark score.

So after database search, they take spot pairs and corresponding candidates and using the database again verify the distance between the spots, if the distance is verified, then another spot is picked and two more distances are verified. To complete the process the fourth spot is picked and three more distances are verified. In case of failure on any step, corresponding candidates are discarded and process re-starts with new pair of spots or candidates. When the number of spots in the verified pattern reaches four, all corresponding candidates are considered reliable, and only then they may be used for attitude estimation. This is a very slow process taking typically from a couple of seconds to one minute.

On the contrary, according to the confidence based match, as soon as two reliable matches are identified, they can be used right away to compute the attitude. No further verification step is needed. The verification step is reduced to checking that the confidence value is greater than the threshold. This process is far less computing intensive and therefore much faster.

One advantage of the proposed solution is the ability to treat every spot independently after its pattern has been generated. Since the matching is performed using only the pattern related to a particular spot, and the verification step is simplified to sorting and filtering of match candidates for that spot, algorithm flow may be executed in $2 \leq n \leq K$ concurrent threads parallel execution threads, where K is the number of spots extracted from captured image and n the number of threads. This solution allows taking advantage of modern multi-core processors by executing the matching step in parallel on different cores. This is not the case in the classical approach where the verification step needs to compare the distance between different spots. This verification steps are not independent computation for each spot. Using the same approach with classic polestar algorithm is somewhat problematic, because verification of matches involve several spots at the same time. Gain in terms of execution time for classic polestar is also hard to predict since verification step execution time may vary depending on the set of objects in question.

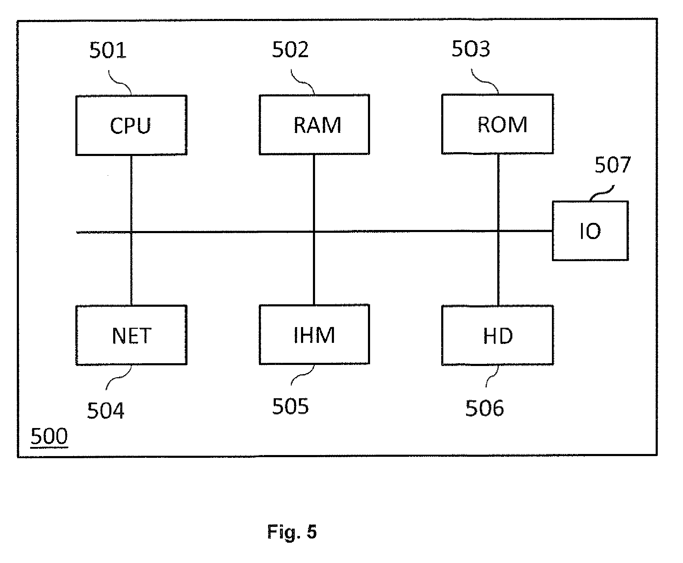

**Figure 5** is a schematic block diagram of a computing device **500** for implementation of one or more embodiments of the invention. The computing device **500** may be a device such as a micro-computer, a workstation or a light portable device. The computing device **500** comprises a communication bus connected to:

- a central processing unit **501**, such as a microprocessor, denoted CPU;
- a random access memory **502,** denoted RAM, for storing the executable code of the method of embodiments of the invention as well as the registers adapted to record variables and parameters necessary for implementing the method for encoding or decoding at least part of an image according to embodiments of the invention, the memory capacity thereof can be expanded by an optional RAM connected to an expansion port for example;
- a read only memory 503, denoted ROM, for storing computer programs for implementing embodiments of the invention;
- a network interface 504 is typically connected to a communication network over which digital data to be processed are transmitted or received. The network interface 504 can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **501;**
- a user interface **505** may be used for receiving inputs from a user or to display information to a user;
- a hard disk **506** denoted HD may be provided as a mass storage device;
- an I/O module **507** may be used for receiving/sending data from/to external devices such as a video source or display.

The executable code may be stored either in read only memory **503,** on the hard disk **506** or on a removable digital medium such as for example a disk. According to a variant, the executable code of the programs can be received by means of a communication network, via the network interface **504,** in order to be stored in one of the storage means of the communication device **500,** such as the hard disk **506,** before being executed.

The central processing unit **501** is adapted to control and direct the execution of the instructions or portions of software code of the program or programs according to embodiments of the invention, which instructions are stored in one of the aforementioned storage means. After powering on, the CPU **501** is capable of executing instructions from main RAM memory **502** relating to a software application after those instructions have been loaded from the program ROM **503** or the hard-disc (HD) **506** for example. Such a software application, when executed by the CPU **501,** causes the steps of the flowcharts shown in **Figures 2** to be performed.

Any step of the algorithm shown in **Figure 2** may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

**Claims**

1.  A method of determining the attitude of a spacecraft, the method comprising:

    - capturing an image of a starry sky by a camera linked to the spacecraft;
    - determining spots representing potential stars in the captured image;
    - extracting for each determined spot an associated pattern based on a circular grid defined by a set of adjacent rings centered on said spot, said pattern being constituted by a binary word, each bit corresponding to one of said rings, each bit being marked according to the neighboring of said spot in the area of the corresponding ring in the captured image;
    - searching, for each determined spot, a database of reference stars for selecting a list of reference stars representing best candidates having an associated pattern close to the spot pattern;
    - verifying if the spot may be positively identified as one reference star by matching the spot and each best candidates; and
    - determine the attitude of the spacecraft from positively identified spots;

    **characterized in that**:

    - said circular grid is a polynomial circular grid that balances the probability of having a mark across the whole pattern.

2.  The method according to claim 1, **characterized in that** said polynomial circular grid is defined by rings delimitated by circles which radius are defined using the polynomial formula:

$$R_{N+1} = R_N + \Delta_N,$$

with:

$$\Delta_N = \sqrt{R_{N-1}^2 + 4\, R_{N-1}\Delta_{N-1} + 2\, \Delta_{N-1}^2} - R_{N-1} - \Delta_{N-1};$$

where $R_N$ is the radius of the nth circle and $\Delta_N$ is the difference between the radius of the nth circle and the radius of the next circle.

3.  The method according to claim 1 or 2, **characterized in that**:

    - said list of best candidates is constituted by selecting the reference star in the database having the highest mark score, said mark score counting the number of corresponding mark in the spot pattern and the reference star pattern; and
    - verifying if the spot may be positively identified as one reference star consists in verifying is a confidence value, based on the mark score and taking into account the fact that camera sensitivity and database magnitude cut-off value may be mismatched, is greater than a given confidence threshold.

4.  The method according to claim 3, **characterized in that**:

    - the confidence value is computed according to the formula:

$$Confidence = 2 * \frac{Mark\ Score}{Star\ Marks + Spot\ Marks};$$

Where *Mark Score* is the mark score, *Star Marks* and *Spot Marks* are respectively the number of marks in the star pattern and in the spot pattern; and
- the confidence threshold is computed according to the formula;

$$Confidence\_theshold = 2 * \frac{Max\ Score - 1}{avg(Star\ Marks) + avg(Spot\ Marks)}$$

Where *Max Score* is the higher mark score, *avg*(*Star Marks*) is the average number of marks in the pattern of reference stars in the database, and *avg*(*Spot Marks*) is the average number of marks of spot patterns.

5. The method according to claim 4, **characterized in that** said confidence threshold is recalculated during operational stage to take into account amount of sensor noise.

6. The method according to claim 4, **characterized in that** said confidence threshold is recalculated at run time to take into account different lightning conditions.

7. The method according to any preceding claim, **characterized in that** said steps of searching and verifying are done in parallel for each spot.

8. A device for determining the attitude of a spacecraft, the device comprising:

- a camera linked to the spacecraft for capturing an image of a starry sky;
- means for determining spots representing potential stars in the captured image;
- means for extracting for each determined spot an associated pattern based on a circular grid defined by a set of adjacent rings centered on said spot, said pattern being constituted by a binary word, each bit corresponding to one of said rings, each bit being marked according to the neighboring of said spot in the area of the corresponding ring in the captured image;
- means for searching, for each determined spot, a database of reference stars for selecting a list of reference stars representing best candidates having an associated pattern close to the spot pattern;
- means for verifying if the spot may be positively identified as one reference star by matching the spot and each best candidates; and
- means for determining the attitude of the spacecraft from positively identified spots;

**characterized in that**:

said circular grid is a polynomial circular grid that normalizes the probability of having a mark across the whole pattern.

9. A computer program product for a programmable apparatus, the computer program product comprising a sequence of instructions for implementing a method according to any one of claims 1 to 7, when loaded into and executed by the programmable apparatus.

10. A computer-readable storage medium storing instructions of a computer program for implementing a method according to any one of claims 1 to 7.

EP 3 182 067 A1

**Fig. 1**

**Fig. 2**

EP 3 182 067 A1

Fig. 3

3.1

3.3

3.2

3.4

3.5

| 0 | 1 | 1 | 0 | 1 |

Fig. 4

11

**Fig. 5**

Europäisches
Patentamt

European
Patent Office

Office européen
des brevets

# EUROPEAN SEARCH REPORT

Application Number

EP 15 30 7060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | E. SILANY; M. LOVERA: "Star Identification Algorithms: Novel Approach & Comparison Study", IEEE TRANSACTIONS ON AREOSPACE AND ELECTRONIC SYSTEMS, vol. 42, no. 4, October 2006 (2006-10), XP002758279, * introcution;; the whole document * | 1-10 | INV. G01C21/24 G01C21/02 |

-----

TECHNICAL FIELDS
SEARCHED (IPC)

G01C

The present search report has been drawn up for all claims

| Place of search | Date of completion of the search | Examiner |
|---|---|---|
| The Hague | 6 June 2016 | Pascheka, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. SILANY ; M. LOVERA.** Star Identification Algorithms: Novel Approach & Comparison Study. *IEEE TRANSACTIONS ON AREOSPACE AND ELECTRONIC SYSTEMS,* October 2006, vol. 42 (4